# EUROPEAN PATENT APPLICATION

(11) **EP 4 391 627 A1**
(43) Date of publication of application: **26.06.2024**
(21) Application number: 22857778.9
(22) Date of filing: 16.08.2022
(51) Int. Cl.: H04W 24/02

(54) **DATA PROCESSING METHOD AND APPARATUS, TERMINAL, ACCESS NETWORK DEVICE, AND CORE NETWORK DEVICE**

(30) Priority: 20.08.2021 CN 202110961566
(71) Applicant: Vivo Mobile Communication Co., Ltd., Dongguan, Guangdong 523863 (CN)
(72) Inventor: ZHANG, Yizhong, Dongguan, Guangdong 523863 (CN); XIE, Zhenhua, Dongguan, Guangdong 523863 (CN)
(74) Representative: Conti, Marco
(86) International application number: PCT/CN2022/112694
(87) International publication number: WO 2023/020466

(57) **Abstract**

This application discloses a data processing method and apparatus, a terminal, an access network device, and a core network device, and relates to the field of communication technologies. The data processing method in embodiments of this application includes: obtaining, by a second terminal, a mapping rule, where the mapping rule is used for instructing the second terminal to perform a data address translation process; and performing, by the second terminal, the data address translation process according to the mapping rule.

## Description

### CROSS-REFERENCE TO RELATED APPLICATIONS

This application claims the priority of Chinese Patent Application No. 202110961566.0 filed in China on August 20, 2021, which is incorporated herein by reference in its entirety.

### TECHNICAL FIELD

This application relates to the field of communication, and in particular, to a data processing method and apparatus, a terminal, an access network device, and a core network device.

### BACKGROUND

With popularization of Internet of Things and smart households, there may be a plurality of smart households in one family. The smart households connect and communicate with various devices in the home (for example, audio and video devices, a lighting system, curtain control, air conditioning control, a security system, and the like), to form a communication topology network, that is, personal Internet of Things, to provide a plurality of functions and means such as household appliance control, lighting control, phone remote control, indoor and outdoor remote control, anti-theft alarm, environmental monitoring, heating and ventilation control, and the like.

In personal Internet of Things scenarios, there may be a scenario in which personal Internet of Things devices need to share information. A potential manner is performing data forwarding through a 5th generation mobile communication technology (5th generation mobile communication technology, 5G) network. However, there is no solution for data forwarding in the 5G network in the related art, resulting in an incomplete communication process and a failure to ensure communication reliability.

### SUMMARY

Embodiments of this application provide a data processing method and apparatus, a terminal, an access network device, and a core network device, which can resolve a problem that there is no solution for data forwarding in a 5G network in the related art, resulting in an incomplete communication process and a failure to ensure communication reliability.

According to a first aspect, a data processing method is provided, including:
obtaining, by a second terminal, a mapping rule, where the mapping rule is used for instructing the second terminal to perform a data address translation process; and
performing, by the second terminal, the data address translation process according to the mapping rule.

According to a second aspect, a data processing apparatus is provided, used in a second terminal, the apparatus including:
a first obtaining module, configured to obtain a mapping rule, where the mapping rule is used for instructing the second terminal to perform a data address translation process; and
a translation module, configured to perform the data address translation process according to the mapping rule.

According to a third aspect, a data processing method is provided, including:
sending, by a first terminal, a mapping rule to a second terminal; or
sending, by a first terminal, a first message to a second terminal or a core network device; or
receiving, by a first terminal, a second message sent by a second terminal, where
the mapping rule is used for instructing the second terminal to perform a data address translation process, the first message is used for requesting the second terminal to perform the data address translation process, and the second message is used for requesting the second terminal to perform the data address translation process.

According to a fourth aspect, a data processing apparatus is provided, used in a first terminal, the apparatus including:
a first transceiver module, configured to: send a mapping rule to a second terminal; or
send a first message to a second terminal or a core network device; or
receive a second message sent by a second terminal, where
the mapping rule is used for instructing the second terminal to perform a data address translation process, the first message is used for requesting the second terminal to perform the data address translation process, and the second message is used for requesting the second terminal to perform the data address translation process.

According to a fifth aspect, a data processing method is provided, including:
sending, by an access network device, a first message to a second terminal; or
receiving a second message sent by a second terminal, where
the first message is used for requesting the second terminal to perform a data address translation process, and the second message is used for requesting the second terminal to perform the data address translation process.

According to a sixth aspect, a data processing apparatus is provided, used in an access network device, the apparatus including:
a second transceiver module, configured to send a first message to a second terminal; or
receive a second message sent by a second terminal, where
the first message is used for requesting the second terminal to perform a data address translation process, and the second message is used for requesting the second terminal to perform the data address translation process.

According to a seventh aspect, a data processing method is provided, including:
receiving, by a core network device, a first message sent by a first terminal, and sending the first message to an access network node; or
receiving, by a core network device, a second message sent by a second terminal, where
the first message is used for requesting the second terminal to perform a data address translation process, and the second message is used for requesting the second terminal to perform the data address translation process.

According to an eighth aspect, a data processing apparatus is provided, used in a core network device, the apparatus including:
a third transceiver module, configured to: receive, by a core network device, a first message sent by a first terminal, and send the first message to an access network node; or
receive a second message sent by a second terminal, where
the first message is used for requesting the second terminal to perform a data address translation process, and the second message is used for requesting the second terminal to perform the data address translation process.

According to a ninth aspect, a terminal is provided, where the terminal is a first terminal or a second terminal, and includes a processor, a memory, and a program or instructions stored in the memory and executable on the processor, the program or instructions, when executed by the processor, implementing the steps of the method according to the first aspect or the third aspect.

According to a tenth aspect, a terminal is provided, where the terminal is a second terminal and includes a processor and a communication interface, and the processor is configured to: obtain a mapping rule, where the mapping rule is used for instructing the second terminal to perform a data address translation process; and perform the data address translation process according to the mapping rule.

According to an eleventh aspect, a terminal is provided, where the terminal is a first terminal and includes a processor and a communication interface, and the communication interface is configured to: send a mapping rule to a second terminal; or
send a first message to a second terminal or a core network device; or
receive, by a first terminal, a second message sent by a second terminal, where
the mapping rule is used for instructing the second terminal to perform a data address translation process, the first message is used for requesting the second terminal to perform the data address translation process, and the second message is used for requesting the second terminal to perform the data address translation process.

According to a twelfth aspect, an access network device is provided, including a processor, a memory, and a program or instructions stored in the memory and executable on the processor, the program or instructions, when executed by the processor, implementing the steps of the method according to the fifth aspect.

According to a thirteenth aspect, an access network device is provided, including a processor and a communication interface, where the communication interface is configured to: send a first message to a second terminal; or
receive, by an access network device, a second message sent by a second terminal, where
the first message is used for requesting the second terminal to perform a data address translation process, and the second message is used for requesting the second terminal to perform the data address translation process.

According to a fourteenth aspect, a core network device is provided, including a processor, a memory, and a program or instructions stored in the memory and executable on the processor, the program or instructions, when executed by the processor, implementing the steps of the method according to the seventh aspect.

According to a fifteenth aspect, a core network device is provided, including a processor and a communication interface, where the communication interface is configured to: receive a first message sent by a first terminal, and send the first message to an access network node; or
receive a second message sent by a second terminal, where
the first message is used for requesting the second terminal to perform a data address translation process, and the second message is used for requesting the second terminal to perform the data address translation process.

According to a sixteenth aspect, a readable storage medium is provided, the readable storage medium storing a program or instructions, the program or instructions, when executed by the processor, implementing the steps of the method according to the first aspect, the third aspect, the fifth aspect, or the seventh aspect.

According to a seventeenth aspect, a chip is provided, including a processor and a communication interface, the communication interface being coupled to the processor, and the processor being configured to run a program or instructions to implement the steps of the method according to the first aspect, the third aspect, the fifth aspect, or the seventh aspect.

According to an eighteenth aspect, a computer program/program product is provided. The computer program/program product is stored in a non-transient storage medium, and the computer program/program product is executed by at least one processor to implement the steps of the method according to the first aspect, the third aspect, the fifth aspect, or the seventh aspect.

According to a nineteenth aspect, a communication device is provided, configured to perform the steps of the method according to the first aspect, the third aspect, the fifth aspect, or the seventh aspect.

In the embodiments of this application, a mapping rule used by the second terminal to perform a data address translation process is obtained, and the data address translation process is performed based on the mapping rule, to ensure that a 5G network performs data forwarding, and ensure the communication reliability.

### BRIEF DESCRIPTION OF THE DRAWINGS

FIG. 1 is a block diagram of a wireless communication system to which an embodiment of this application is applicable;
FIG. 2 is a schematic flowchart of a data processing method applied to a second terminal according to an embodiment of this application;
FIG. 3 is a first schematic flowchart of a specific application process according to an embodiment of this application;
FIG. 4 is a second schematic flowchart of a specific application process according to an embodiment of this application;
FIG. 5 is a third schematic flowchart of a specific application process according to an embodiment of this application;
FIG. 6 is a fourth schematic flowchart of a specific application process according to an embodiment of this application;
FIG. 7 is a first schematic diagram of modules of a data processing apparatus according to an embodiment of this application;
FIG. 8 is a structural block diagram of a terminal according to an embodiment of this application;
FIG. 9 is a schematic flowchart of a data processing method applied to a first terminal according to an embodiment of this application;
FIG. 10 is a second schematic diagram of modules of a data processing apparatus according to an embodiment of this application;
FIG. 11 is a schematic flowchart of a data processing method applied to an access network device according to an embodiment of this application;
FIG. 12 is a third schematic diagram of modules of a data processing apparatus according to an embodiment of this application;
FIG. 13 is a structural block diagram of an access network device according to an embodiment of this application;
FIG. 14 is a schematic flowchart of a data processing method applied to a core network device according to an embodiment of this application;
FIG. 15 is a fourth schematic diagram of modules of a data processing apparatus according to an embodiment of this application; and
FIG. 16 is a structural block diagram of a communication device according to an embodiment of this application.

### DETAILED DESCRIPTION

The following clearly describes the technical solutions in the embodiments of this application with reference to the accompanying drawings in the embodiments of this application. Apparently, the described embodiments are some rather than all of the embodiments of this application. All other embodiments obtained by a person of ordinary skill in the art based on the embodiments of this application fall within the protection scope of this application.

In the specification and the claims of this application, the terms "first", "second", and so on are intended to distinguish similar objects but do not necessarily indicate a specific order or sequence. It is to be understood that the term used in such a way is interchangeable in proper circumstances, so that the embodiments of this application can be implemented in other sequences than the sequence illustrated or described herein. In addition, the objects distinguished by "first", "second", and the like are usually of one type, and a quantity of objects is not limited, for example, there may be one or more first objects. In addition, "and/or" used in the specification and the claims represents at least one of the connected objects, and a character "/" in this specification generally indicates an "or" relationship between the associated obj ects.

In this application, optionally, obtaining may be understood as obtaining through configuration, receiving, receiving after requesting, obtaining through self-learning, obtaining based on derivation from unreceived information, or obtaining after processing based on received information, which may be specifically determined according to actual requirements. This is not limited in this embodiment of this application. For example, when indication information that is of a capability and that is sent by a device is not received, it may be derived that the device does not support the capability.

It is to be noted that, the technologies described in the embodiments of this application are not limited to a long term evolution (long term evolution, LTE)/LTE-Advanced (LTE-advanced, LTE-A) system, or may be applied to other wireless communication systems such as code division multiple access (code division multiple access, CDMA), time division multiple access (time division multiple access, TDMA), frequency division multiple access (frequency division multiple access, FDMA), orthogonal frequency division multiple access (orthogonal frequency division multiple access, OFDMA), single-carrier frequency-division multiple access (single-carrier frequency-division multiple access, SC-FDMA), and another system. In the embodiments of this application, the terms "system" and "network" are usually interchangeably used, and the technology described herein can be applied to the systems and radio technologies mentioned above, and can also be applied to other systems and radio technologies. Although the technologies are also applicable to applications other than NR system applications, for example, a 6th generation (6th Generation, 6G) communication system, a new radio (new radio, NR) system is exemplarily described in the following descriptions, and the term "NR" is used in most of the following descriptions.

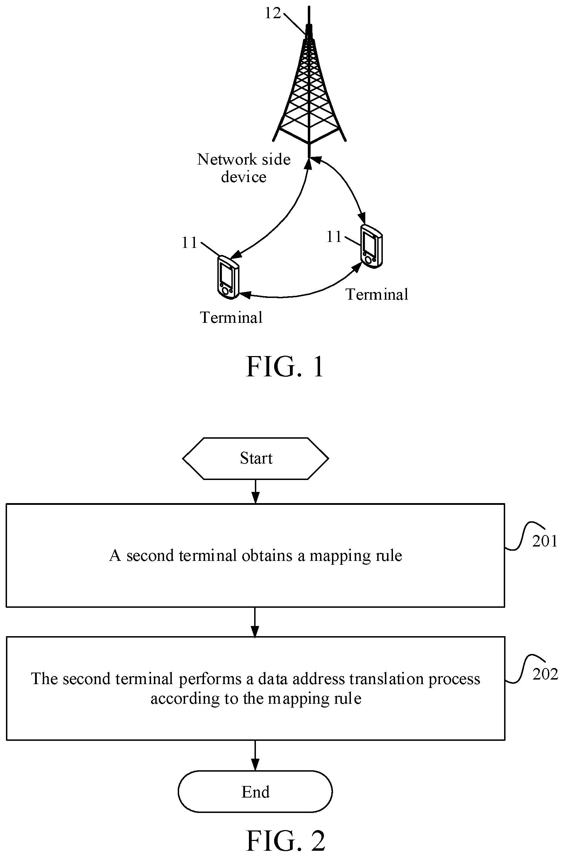

FIG. 1 shows a block diagram of a wireless communication system to which an embodiment of this application is applicable. The communication system includes a terminal 11 and a network side device 12. The terminal 11 may be a terminal side device such as a mobile phone, a tablet personal computer (tablet personal computer), a laptop computer (laptop computer) or notebook computer, a personal digital assistant (personal digital assistant, PDA), a palmtop computer, a notebook, an ultra-mobile personal computer (ultra-mobile personal computer, UMPC), a mobile Internet device (mobile Internet device, MID), an augmented reality (augmented reality, AR)/virtual reality (virtual reality, VR) device, a robot, a wearable device (a wearable device), a vehicle user equipment (vehicle user equipment, VUE), a pedestrian user equipment (pedestrian user equipment, PUE), a smart household (which is a household device having a wireless communication function, for example, a refrigerator, a television, a washing machine, or furniture), or the like. The wearable device includes: a smart watch, a smart bracelet, a smart headset, smart glasses, smart jewelry (a smart bangle, a smart chain bracelet, a smart ring, a smart necklace, a smart ankle bangle, a smart anklet, or the like), a smart wristband, smart clothing, a game console, and the like. It is to be noted that, the specific type of the terminal 11 is not limited in the embodiments of this application. The network side device 12 may be a base station or a core network. The base station may be referred to as a nodeB, an evolved nodeB (evolved nodeB, eNB), an access point, a base transceiver station (base transceiver station, BTS), a radio base station, a radio transceiver, a basic service set (basic service set, BSS), an extended service set (extended service set, ESS), a home nodeB, a home evolved nodeB, a wireless local area network (wireless local area network, WLAN) access point, a wireless fidelity (wireless fidelity, Wi-Fi) node, a transmitting receiving point (transmitting receiving point, TRP), or another suitable term in the field. The base station is not limited to a specific technical term as long as the same technical effect is achieved. It should be noted that, in the embodiments of this application, a base station in the NR system is only used as an example, but a specific type of the base station is not limited thereto.

The data processing method and apparatus, a terminal, an access network device, and a core network device provided in the embodiments of this application are described in detail below with reference to the accompanying drawings by using some embodiments and application scenarios thereof.

As shown in FIG. 2, an embodiment of this application provides a data processing method, including:
Step 201: A second terminal obtains a mapping rule.

It is to be noted that, the mapping rule is used for instructing the second terminal to perform a data address translation process.

Step 202: The second terminal performs the data address translation process according to the mapping rule.

The second terminal in this embodiment of this application is a terminal that receives data that originally needs to be sent to a first terminal. For example, the second terminal is any device in personal Internet of Things, for example, a smart household such as a television, a camera, or the like, a wearable device, or the like.

For example, the mobile phone intends to case a video on the television, but a video application (application, APP) does not have a screen mirroring function. The mobile phone hopes to achieve this function through a 5G network, that is, data originally sent to the mobile phone is forwarded to the television through the 5G network. In this case, the mobile phone corresponds to the first terminal mentioned in this embodiment of this application, and the television corresponds to the second terminal mentioned in this embodiment of this application.

It is to be noted that, because the first terminal can actively control the second terminal, for example, the first terminal may alternatively be a personal control terminal such as a mobile phone in personal Internet of Things.

It is to be noted that, an implementation of performing the data address translation process by the second terminal is as follows: performing, by the second terminal, the data address translation process in a network address translation (network address translation, NAT) manner.

Further, it is to be noted that, when the second terminal receives a data packet from a network, the data packet is originally sent to the first terminal, and therefore, a destination address of the data packet is the first terminal. In this case, if the second terminal does not perform NAT, the second terminal cannot parse the data packet. By applying this embodiment of this application, after the second terminal receives the data packet from the network, a bottom layer replaces the destination address of the data packet from the first terminal to the second terminal, so that a higher layer of the second terminal considers that the data packet is sent to the second terminal by the network, and the second terminal can continue to parse the data packet to obtain corresponding data.

When sending data to the network, the second terminal replaces a source address from the second terminal to the first terminal, to send the data packet. In this way, after receiving the data packet, the network considers that the data packet is sent by the first terminal.

It is to be noted that, the mapping rule may be notified by the first terminal to the second terminal, or may be determined by the second terminal. The embodiments of this application are separately described in detail below from the perspective of an entity that generates the mapping rule.

### 1. The first terminal generates the mapping rule

It is to be noted that, in this case, an optionally implementation of step 201 is as follows:
receiving, by the second terminal, the mapping rule sent by a first terminal.

Optionally, the mapping rule includes:
a mapping relationship between first information of the first terminal and second information of the second terminal, where
the first information includes at least one of the following: an Internet Protocol (Internet Protocol, IP) address, a port number, a fully qualified domain name (fully qualified domain name, FQDN), and a uniform resource locator (uniform resource locator, URL); and
the second information includes at least one of the following: an IP address, a port number, an FQDN, and a URL.

It is to be noted that, for example, the mapping rule may be a mapping list. Generally, first information and second information in the mapping list are in a one-to-one correspondence. For example, the mapping list includes, but is not limited to, at least one of the following: an IP address of the first terminal corresponds to an IP address of the second terminal, a port number of the first terminal corresponds to a port number of the second terminal, an FQDN of the first terminal corresponds to an FQDN of the second terminal, a URL of the first terminal corresponds to a URL of the second terminal, the IP address of the first terminal corresponds to the port number of the second terminal, and the like.

### 2. The second terminal generates the mapping rule (the first terminal triggers data forwarding)

It is to be noted that, in this case, an optional implementation of step 201 is as follows:
obtaining, by the second terminal, a first message, where the first message is used for requesting the second terminal to perform the data address translation process; and
obtaining, by the second terminal, the mapping rule according to the first message.

In other words, in this case, the mapping rule is determined by the second terminal according to the first message.

It is to be noted that, generally, the first message includes at least one of the following: an IP address, a port number, an FQDN, and a URL of the first terminal. In other words, after the second terminal receives the first message, because the first message includes related information of the first terminal, the second terminal may generate the mapping rule according to at least one of the IP address, the port number, the FQDN, and the URL of the first terminal.

Optionally, an implementation of obtaining the first message by the second terminal may use one of the following:
Implementation 1: The second terminal receives, by using a direct communication technology, the first message sent by the first terminal.

It is to be noted that, the direct communication technology in this embodiment of this application includes, but is not limited to a WLAN direct communication technology, a Bluetooth connection communication technology, a PC5 sidelink (sidelink) communication technology, and the like.

Further, it is to be noted that, after receiving the first message sent by the first terminal, the second terminal further needs to send a first accept message to the first terminal.

Optionally, the first accept message includes at least one of the following:
an IP address, a port number, an FQDN, and a URL of the first terminal.

Implementation 2: The second terminal receives, through an access network device, the first message sent by the first terminal.

It is to be noted that, in this implementation, the second terminal does not directly communicate with the first terminal, but forwards an interaction message of the second terminal and the first terminal through the access network device. The second terminal needs to feed back the first accept message after receiving the first message of the first terminal, and the access network device forwards the first accept message to the first terminal when receiving the first accept message sent by the second terminal.

Optionally, the first accept message includes at least one of the following:
an IP address, a port number, an FQDN, and a URL of the first terminal.

Implementation 3: The second terminal receives the first message sent by a core network device.

It is to be noted that, in this case, an implementation is as follows: The first terminal sends the first message to the core network device, the core network device sends the first message to the second terminal through the access network device, and the second terminal further needs to feed back the first accept message to the core network device.

In this case, another implementation is as follows: The first terminal sends a forwarding request to the core network device, and the core network device sends a forwarding accept message to the access network device, where the forwarding accept message carriers at least one of the IP address, the port number, the FQDN, and the URL of the first terminal. After receiving the forwarding accept message, the access network device sends the first message (in this case, the first message is a forwarding instruction) to the second terminal according to the forwarding accept message, and after receiving the first message, the second terminal feeds back the first accept message to the access network device.

Specifically, the first accept message includes at least one of the following: an IP address, a port number, an FQDN, and a URL of the first terminal.

### 3. The second terminal generates the mapping rule (the second terminal triggers data forwarding)

It is to be noted that, in this case, before step 201, the method further includes:
sending, by the second terminal, a second message, where the second message is used for requesting the second terminal to perform the data address translation process.

Optionally, the second message includes at least one of the following: an IP address, a port number, an FQDN, and a URL of the first terminal.

Optionally, an implementation of sending the second message by the second terminal may use one of the following:
Implementation 1: The second terminal sends the second message to a first terminal by using a direct communication technology.

It is to be noted that, the direct communication technology in this embodiment of this application includes, but is not limited to a WLAN direct communication technology, a Bluetooth connection communication technology, a PC5 sidelink communication technology, and the like.

Further, it is to be noted that, after receiving the first message sent by the second terminal, the first terminal further needs to send a second accept message to the second terminal. Optionally, the second accept message includes at least one of the following:
an IP address, a port number, an FQDN, and a URL of the first terminal.

Further, the second terminal obtains the mapping rule according to the second accept message. In other words, in this case, the second terminal determines the mapping rule according to the second accept message fed back by the first terminal.

Implementation 2: The second terminal forwards the second message to the first terminal through an access network device.

It is to be noted that, in this implementation, the second terminal does not directly communicate with the first terminal, but forwards an interaction message of the second terminal and the first terminal through the access network device. The first terminal needs to feed back the second accept message after receiving the second message of the second terminal, and the access network device forwards the second accept message to the second terminal when receiving the second accept message sent by the first terminal. The second terminal obtains the mapping rule according to the second accept message. In other words, in this case, the second terminal determines the mapping rule according to the second accept message fed back by the first terminal.

Implementation 3: The second terminal sends the second message to a core network device.

It is to be noted that, in this case, an implementation is as follows: The second terminal sends the second message to the core network device, the core network device sends the second accept message to the second terminal through the access network device, and the second terminal determines the mapping rule according to the second accept message.

Optionally, the second accept message includes at least one of the following:
an IP address, a port number, an FQDN, and a URL of the first terminal.

It is to be noted that, the IP address in this embodiment of this application includes, but is not limited to at least one of an IPv4 address and an IPv6 address.

The following describes a process of implementing data forwarding through specific interaction between various devices described above in a specific application by using an example.

Specific case 1: Direct communication exists between the first terminal and the second terminal, and the first terminal determines the mapping rule and sends the mapping rule to the second terminal.

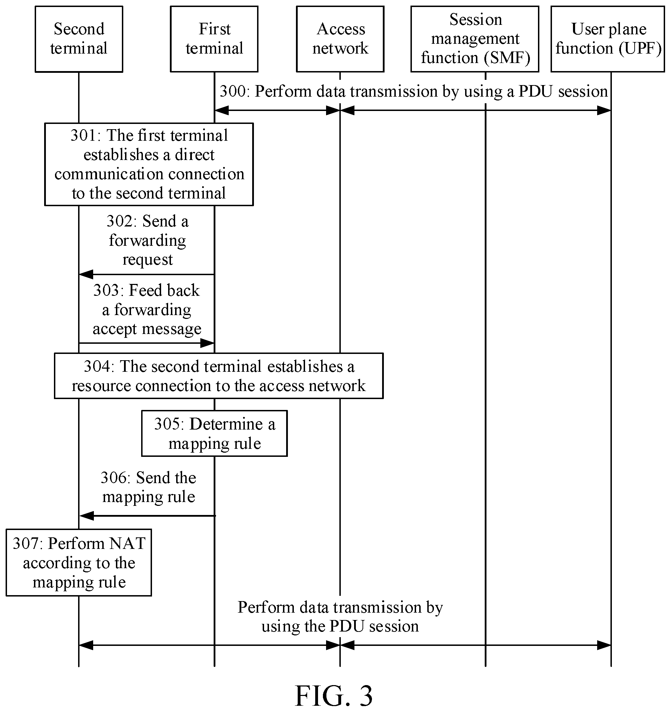

As shown in FIG. 3, a specific application process in this case mainly includes the following steps:
Step 300: The first terminal performs data transmission by using a protocol data unit (protocol data unit, PDU) session.
Step 301: The first terminal establishes a direct communication connection to the second terminal.

It is to be noted that, direct communication may be implemented in a manner such as Bluetooth, sidelink (sidelink), WI-FI, wired connection, and the like.

Step 302: The first terminal sends a forwarding request.

Step 303: The second terminal feeds back a forwarding accept message.

Optionally, the forwarding accept message carries at least one of an IP address and a port number of the second terminal.

Step 304: The second terminal establishes a resource connection to an access network.

Generally, the second terminal needs to establishes an air interface resource corresponding to the access network with assistance of the first terminal.

Step 305: The first terminal determines the mapping rule.

It is to be noted that, the first terminal mainly determines the mapping rule according to the forwarding accept message.

Step 306: The first terminal sends the mapping rule to the second terminal.

Step 307: The second terminal performs NAT according to the mapping rule after receiving a data packet.

The second terminal performs data transmission by using the PDU session, and an application server has no perception on a transceiver entity of data.

It is to be noted that, in this case, there is no specific precedence between step 304 and step 305, and the second terminal can perform whichever step first.

Specific case 2: Direct communication exists between the first terminal and the second terminal, the first terminal initiates a forwarding request and sends the IP address and the port number to the second terminal in the forwarding request, and the second terminal determines the mapping rule.

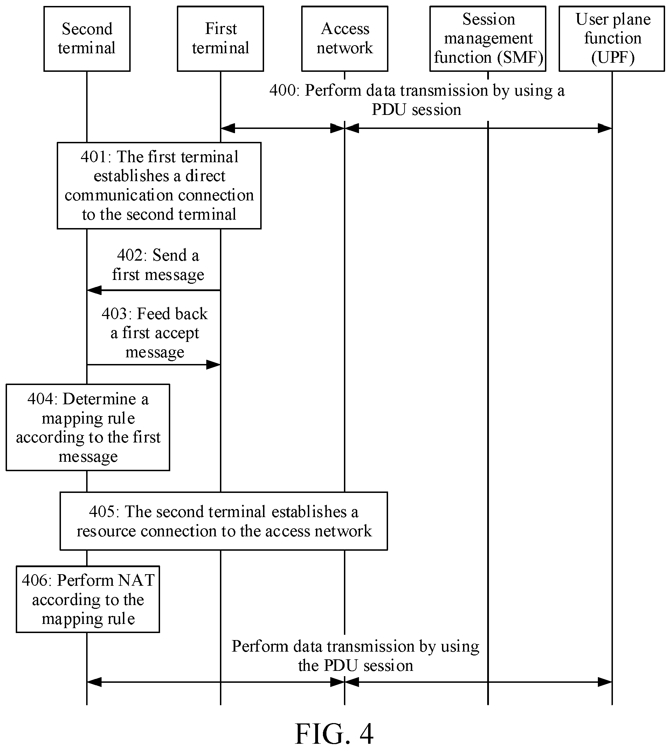

As shown in FIG. 4, a specific application process in this case mainly includes the following steps:
Step 400: The first terminal performs data transmission by using a PDU session.
Step 401: The first terminal establishes a direct communication connection to the second terminal.

It is to be noted that, direct communication may be implemented in a manner such as Bluetooth, sidelink (sidelink), WI-FI, wired connection, and the like.

Step 402: The first terminal sends a first message.

It is to be noted that, the first message is a forwarding request; and the first message carries at least one of an IP address, a port number, an FQDN, and a URL of the first terminal.

Step 403: The second terminal feeds back a first accept message.

It is to be noted that, the first accept message is a forwarding accept message.

Optionally, the forwarding accept message carries at least one of the IP address, the port number, the FQDN, and the URL of the first terminal.

Step 404: The second terminal determines a mapping rule according to the first message.

Step 405: The second terminal establishes a resource connection to an access network.

Generally, the second terminal needs to establishes an air interface resource corresponding to the access network with assistance of the first terminal.

Step 406: The second terminal performs NAT according to the mapping rule after receiving a data packet.

The second terminal performs data transmission by using the PDU session, and an application server has no perception on a transceiver entity of data.

It is to be noted that, in this case, there is no specific precedence between step 404 and step 405, and the second terminal can perform whichever step first.

Specific case 3: Direct communication does not exist between the first terminal and the second terminal, the first terminal forwards the forwarding request through a RAN and carries the IP address and the port number in the forwarding request, and the second terminal determines the mapping rule.

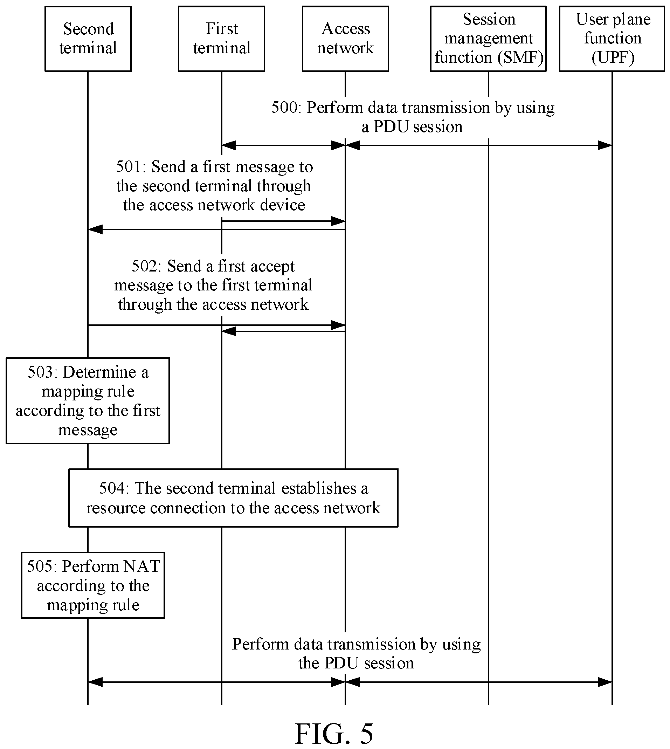

As shown in FIG. 5, a specific application process in this case mainly includes the following steps:
Step 500: The first terminal performs data transmission by using a PDU session.
Step 501: The first terminal sends a first message to the second terminal through an access network.

It is to be noted that, the first message is a forwarding request; and the first message carries at least one of an IP address, a port number, an FQDN, and a URL of the first terminal.

Step 502: The second terminal sends a first accept message to the first terminal through the access network.

It is to be noted that, the first accept message is a forwarding accept message.

Step 503: The second terminal determines a mapping rule according to the first message.

Step 504: The second terminal establishes a resource connection to an access network.

Generally, the second terminal needs to establishes an air interface resource corresponding to the access network with assistance of the first terminal.

Step 505: The second terminal performs NAT according to the mapping rule after receiving a data packet.

The second terminal performs data transmission by using the PDU session, and an application server has no perception on a transceiver entity of data.

It is to be noted that, in this case, there is no specific precedence between step 503 and step 504, and the second terminal can perform whichever step first.

Specific case 4: Direct communication does not exist between the first terminal and the second terminal, the first terminal initiates a data forwarding request to a session management function (session management function, SMF), sends a forwarding accept message to a radio access network (radio access network, RAN) after the SMF agrees, and carries the IP address and the port number of the first terminal in the forwarding accept message. The RAN sends a forwarding instruction to the second terminal and carries the IP address and the port number of the first terminal in the forwarding instruction, and the first terminal determines the mapping rule and sends the mapping rule to the second terminal.

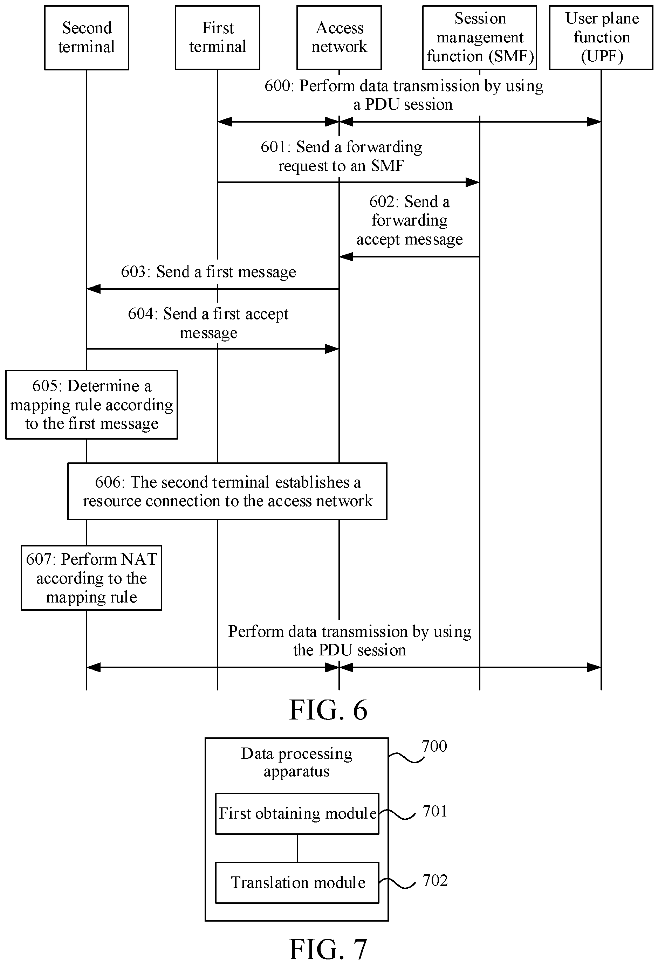

As shown in FIG. 6, a specific application process in this case mainly includes the following steps:
Step 600: The first terminal performs data transmission by using a PDU session.
Step 601: The first terminal sends a forwarding request to an SMF.
Step 602: The SMF sends a forwarding accept message to an access network.
Step 603: The access network sends a first message to the second terminal.

It is to be noted that, the first message is a forwarding instruction; and the first message carries at least one of an IP address, a port number, an FQDN, and a URL of the first terminal.

Step 604: The second terminal sends a first accept message to the access network.

Step 605: The second terminal determines a mapping rule according to the first message.

Step 606: The second terminal establishes a resource connection to an access network.

Generally, the second terminal needs to establishes an air interface resource corresponding to the access network with assistance of the first terminal.

Step 607: The second terminal performs NAT according to the mapping rule after receiving a data packet.

The second terminal performs data transmission by using the PDU session, and an application server has no perception on a transceiver entity of data.

It is to be noted that, in this case, there is no specific precedence between step 605 and step 606, and the second terminal can perform whichever step first.

It is to be noted that, a mapping rule used by the second terminal to perform a data address translation process is obtained, and the data address translation process is performed based on the mapping rule, to ensure that a 5G network performs data forwarding, and ensure the communication reliability.

It is to be noted that, an execution entity of the data processing method provided in the embodiments of this application may be a data processing apparatus, or may be a control module in the data processing apparatus for performing the data processing method. The data processing apparatus provided in the embodiments of this application is described in the embodiments of this application by using an example in which the data processing apparatus performs the data processing method.

As shown in FIG. 7, an embodiment of this application provides a data processing apparatus 700, used in a second terminal, the apparatus including:
a first obtaining module 701, configured to obtain a mapping rule, where the mapping rule is used for instructing the second terminal to perform a data address translation process; and
a translation module 702, configured to perform the data address translation process according to the mapping rule.

Optionally, the first obtaining module 701 includes:
a first receiving module, configured to the mapping rule sent by a first terminal.

Optionally, the mapping rule includes:
a mapping relationship between first information of the first terminal and second information of the second terminal, where
the first information includes at least one of the following: an IP address, a port number, a fully qualified domain name FQDN, and a uniform resource locator URL; and
the second information includes at least one of the following: an IP address, a port number, an FQDN, and a URL.

Optionally, the first obtaining module 701 includes:
a first obtaining unit, configured to obtain a first message, where the first message is used for requesting the second terminal to perform the data address translation process; and
a second obtaining unit, configured to obtain the mapping rule according to the first message.

Optionally, the first message includes at least one of the following: an IP address, a port number, an FQDN, and a URL of the first terminal.

Optionally, the first obtaining module is configured to implement one of the following:
receiving, by the second terminal by using a direct communication technology, the first message sent by a first terminal;
receiving, by the second terminal through an access network device, the first message sent by the first terminal; and
receiving, by the second terminal, the first message sent by a core network device.

Optionally, the first sending module includes one of the following:
a first sending unit, configured to send, by the second terminal, a first accept message to a first terminal;
a second sending unit, configured to send, by the second terminal, the first accept message to an access network device; and
a third sending unit, configured to send, by the second terminal, the first accept message to a core network device.

Optionally, the first accept message includes at least one of the following:
an IP address, a port number, an FQDN, and a URL of the first terminal.

Optionally, before the first obtaining module 701 obtains the mapping rule, the first sending module is further configured to:
send a second message, where the second message is used for requesting the second terminal to perform the data address translation process.

Optionally, the second message includes at least one of the following: an IP address, a port number, an FQDN, and a URL of the first terminal.

Optionally, the first sending module is configured to implement one of the following:
sending the second message to a first terminal by using a direct communication technology;
forwarding the second message to the first terminal through an access network device; and
sending the second message to a core network device.

Optionally, the data processing apparatus 700 further includes one of the following:
a first receiving module, configured to: after the first sending module sends the second message, receive, by using a direct communication technology, a second accept message sent by a first terminal;
a second receiving module, configured to receive, after the first sending module sends the second message, the second accept message forwarded by the first terminal through an access network device;
a third receiving module, configured to receive, after the first sending module sends the second message, the second accept message forwarded by a core network device through the access network device; and
the first obtaining module 701, configured to:
   obtain the mapping rule according to the second accept message.

Optionally, the second accept message includes at least one of the following:
an IP address, a port number, an FQDN, and a URL of the first terminal.

Optionally, the translation module 702 is configured to:
perform the data address translation process in a network address translation NAT manner.

It is to be noted that, the apparatus embodiment is in a one-to-one correspondence with the method embodiment. All implementation processes of the method embodiment are applicable to the apparatus embodiment and can achieve the same technical effects. Details are not described herein again.

The data processing apparatus in the embodiments of this application may be an apparatus, an apparatus or electronic device with an operating system, or may be a component, an integrated circuit, or a chip in the terminal. The apparatus or the electronic device may be a mobile terminal or may be a non-mobile terminal. For example, the mobile terminal may include but is not limited to a type of the terminal 11 listed above, and the non-mobile terminal may be a server, a network attached storage (network attached storage, NAS), a personal computer (personal computer, PC), a television (television, TV), a teller machine, a self-service machine, or the like. This is not specifically limited in the embodiments of this application.

The data processing apparatus provided in the embodiments of this application can implement the processes implemented in the method embodiment of FIG. 2 and achieve the same technical effect. To avoid repetition, details are not described herein again.

An embodiment of this application further provides a terminal, where the terminal is a second terminal and includes a processor and a communication interface, and the processor is configured to: obtain a mapping rule, where the mapping rule is used for instructing the second terminal to perform a data address translation process; and perform the data address translation process according to the mapping rule.

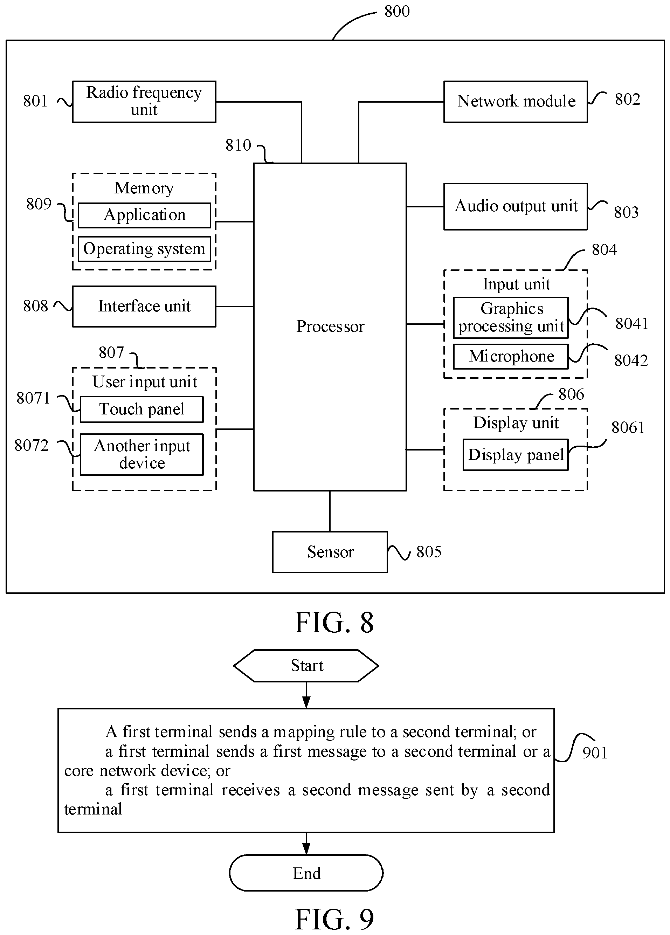

The embodiment of the terminal corresponds to the embodiment of the method applied to the side of the second terminal. All implementation processes of the method embodiment are applicable to the embodiment of the terminal and can achieve the same technical effects. Specifically, FIG. 8 is a schematic diagram of a hardware structure of a terminal according to an embodiment of this application.

The terminal 800 is a second terminal, and includes, but is not limited to, at least some components such as a radio frequency unit 801, a network module 802, an audio output unit 803, an input unit 804, a sensor 805, a display unit 806, a user input unit 807, an interface unit 808, a memory 809, and a processor 810.

A person skilled in the art may understand that, the terminal 800 may further include a power supply (such as a battery) for supplying power to the components. Preferably, the power supply may be logically connected to the processor 810 by using a power management system, thereby implementing functions such as charging, discharging, and power consumption management by using the power management system. A terminal structure shown in FIG. 8 does not constitute a limitation to the terminal, and the terminal may include more or fewer components than those shown in the figure, or some components may be combined, or a different component deployment may be used. Details are not described herein again.

It may be understood that, in the embodiments of this application, the input unit 804 may include a graphics processing unit (graphics processing unit, GPU) 8041 and a microphone 8042. The graphics processing unit 8041 processes image data of a static picture or a video obtained by an image capturing apparatus (for example, a camera) in a video capturing mode or an image capturing mode. The display unit 806 may include a display panel 8061, for example, a display panel 8061 configured in a form such as a liquid crystal display or an organic light-emitting diode. The user input unit 807 includes a touch panel 8071 and another input device 8072. The touch panel 8071 is also referred to as a touchscreen. The touch panel 8071 may include a touch detection apparatus and a touch controller. The another input device 8072 may include, but is not limited to, a physical keyboard, a functional key (such as a volume control key or a switch key), a track ball, a mouse, and a joystick, and the details will not be described herein again.

In this embodiment of this application, the radio frequency unit 801 receives downlink data from a network side device and sends the data to the processor 810 for processing; and sends uplink data to the network side device. Generally, the radio frequency unit 801 includes, but is not limited to, an antenna, at least one amplifier, a transceiver, a coupler, a low noise amplifier, a duplexer, and the like.

The memory 809 may be configured to store a software program or instructions and various data. The memory 809 may mainly include a program storage or instruction area and a data storage area. The program storage or instruction area may store an operating system, an application program or instructions required by at least one function (for example, a sound playback function and an image playback function), or the like. In addition, the memory 809 may include a high speed random access memory, and may further include a non-volatile memory. The non-volatile memory may be a read-only memory (read-only memory, ROM), a programmable ROM (programmable ROM, PROM), an erasable PROM (erasable PROM, EPROM), an electrically EPROM (electrically EPROM, EEPROM), or a flash memory. For example, at least one magnetic disk storage device, a flash memory device, or another non-volatile solid-state storage device.

The processor 810 may include one or more processing units. Optionally, the processor 810 may integrate an application processor and a modem processor. The application processor mainly processes an operating system, a user interface, an application program or instructions, and the like. The modem processor mainly processes wireless communication, for example, a baseband processor. It may be understood that the modem processor may not be integrated into the processor 810.

The processor 810 is configured to:
obtain a mapping rule, where the mapping rule is used for instructing the second terminal to perform a data address translation process; and
perform the data address translation process according to the mapping rule.

In the embodiments of this application, the terminal obtains a mapping rule used by the second terminal to perform a data address translation process is obtained, and the data address translation process is performed based on the mapping rule, to ensure that a 5G network performs data forwarding, and ensure the communication reliability.

Optionally, the radio frequency unit 801 is configured to:
receive the mapping rule sent by a first terminal.

Optionally, the mapping rule includes:
a mapping relationship between first information of the first terminal and second information of the second terminal, where
the first information includes at least one of the following: an IP address, a port number, a fully qualified domain name FQDN, and a uniform resource locator URL; and
the second information includes at least one of the following: an IP address, a port number, an FQDN, and a URL.

Optionally, the processor 810 is configured to:
obtain a first message, where the first message is used for requesting the second terminal to perform the data address translation process; and
obtain, by the second terminal, the mapping rule according to the first message.

Optionally, the first message includes at least one of the following: an IP address, a port number, an FQDN, and a URL of the first terminal.

Optionally, the radio frequency unit 801 is configured to implement one of the following:
receiving, by using a direct communication technology, the first message sent by a first terminal;
receiving, through an access network device, the first message sent by the first terminal; and
receiving the first message sent by a core network device.

Optionally, the radio frequency unit 801 is further configured to implement one of the following:
sending a first accept message to a first terminal;
sending the first accept message to an access network device; and
sending the first accept message to a core network device.

Optionally, the first accept message includes at least one of the following:
an IP address, a port number, an FQDN, and a URL of the first terminal.

Optionally, the radio frequency unit 801 is further configured to:
send a second message, where the second message is used for requesting the second terminal to perform the data address translation process.

Optionally, the second message includes at least one of the following: an IP address, a port number, an FQDN, and a URL of the first terminal.

Optionally, the radio frequency unit 801 is further configured to implement one of the following:
sending the second message to a first terminal by using a direct communication technology;
forwarding the second message to the first terminal through an access network device; and
sending the second message to a core network device.

Optionally, the radio frequency unit 801 is further configured to implement one of the following:
receiving, by using a direct communication technology, a second accept message sent by a first terminal;
receiving the second accept message forwarded by the first terminal through an access network device; and
receiving the second accept message forwarded by a core network device through the access network device.

Further, the processor 810 is configured to:
obtain the mapping rule according to the second accept message.

Optionally, the second accept message includes at least one of the following:
an IP address, a port number, an FQDN, and a URL of the first terminal.

Optionally, the performing the data address translation process includes:
performing the data address translation process in a network address translation NAT manner.

Preferably, an embodiment of this application further provides a terminal, where the terminal is a second terminal and includes a processor, a memory, and a program or instructions stored in the memory and runnable on the processor, the program or instructions, when executed by the processor, implementing the processes of the embodiments of the data processing method, and achieving the same technical effect. To avoid repetition, details are not described herein again.

An embodiment of this application further provides a readable storage medium. The readable storage medium may be non-volatile or volatile. The readable storage medium stores a program or instructions, the program or instructions, when executed by a processor, implementing the processes of the embodiments of the data processing method applied to a second terminal, and achieving the same technical effect. To avoid repetition, details are not described herein again. The computer-readable storage medium is, for example, a read-only memory (read-only memory, ROM), a random access memory (random access memory, RAM), a magnetic disk, or an optical disc.

As shown in FIG. 9, an embodiment of this application further provides a data processing method, including:
Step 901: A first terminal sends a mapping rule to a second terminal; or
a first terminal sends a first message to a second terminal or a core network device; or
a first terminal receives a second message sent by a second terminal, where
the mapping rule is used for instructing the second terminal to perform a data address translation process, the first message is used for requesting the second terminal to perform the data address translation process, and the second message is used for requesting the second terminal to perform the data address translation process.

Optionally, the mapping rule includes:
a mapping relationship between first information of the first terminal and second information of the second terminal, where
the first information includes at least one of the following: an IP address, a port number, a fully qualified domain name FQDN, and a uniform resource locator URL; and
the second information includes at least one of the following: an IP address, a port number, an FQDN, and a URL.

Optionally, the first message includes at least one of the following: an IP address, a port number, an FQDN, and a URL of the first terminal.

Optionally, that the first terminal sends the first message to the second terminal includes one of the following:
sending, by the first terminal, the first message to the second terminal by using a direct communication technology; and
sending, by the first terminal, the first message to the second terminal through an access network device.

Optionally, after the first terminal sends the first message to the second terminal, the method further includes:
receiving, by the first terminal by using a direct communication technology, a first accept message sent by the second terminal; and
receiving, by the first terminal, the first accept message sent by an access network device.

Optionally, the first accept message includes at least one of the following:
an IP address, a port number, an FQDN, and a URL of the first terminal.

Optionally, the second message includes at least one of the following: an IP address, a port number, an FQDN, and a URL of the first terminal.

Optionally, that the first terminal receives the second message sent by the second terminal includes one of the following:
receiving, by the first terminal by using a direct communication technology, the second message sent by the second terminal; and
receiving, by the first terminal through an access network device, the second message forwarded by the second terminal.

Optionally, after the first terminal receives the second message sent by the second terminal, the method further includes one of the following:
sending, by the first terminal, a second accept message to the second terminal by using a direct communication technology; and
forwarding, by the first terminal, the second accept message to the second terminal through an access network device.

Optionally, the second accept message includes at least one of the following:
an IP address, a port number, an FQDN, and a URL of the first terminal.

It is to be noted that, the descriptions of the first terminal in the foregoing embodiments are all applicable to the embodiment of the data processing method applied to the first terminal and can achieve the same technical effects. Details are not described herein again.

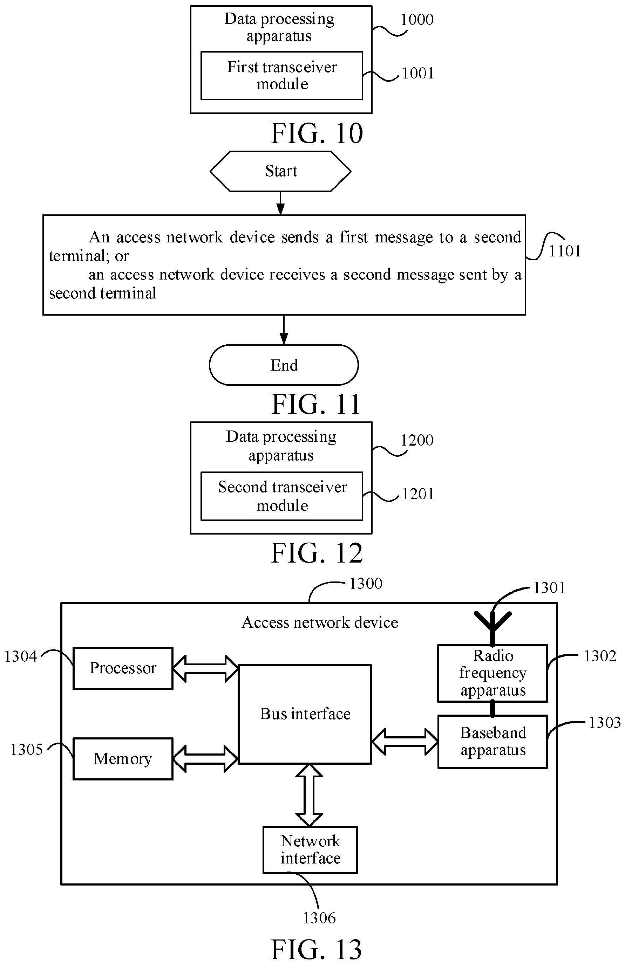

As shown in FIG. 10, an embodiment of this application further provides a data processing apparatus 1000, used in a first terminal, the apparatus including:
a first transceiver module 1001, configured to: send a mapping rule to a second terminal; or
send a first message to a second terminal or a core network device; or
receive a second message sent by a second terminal, where
the mapping rule is used for instructing the second terminal to perform a data address translation process, the first message is used for requesting the second terminal to perform the data address translation process, and the second message is used for requesting the second terminal to perform the data address translation process.

Optionally, the mapping rule includes:
a mapping relationship between first information of the first terminal and second information of the second terminal, where
the first information includes at least one of the following: an IP address, a port number, a fully qualified domain name FQDN, and a uniform resource locator URL; and
the second information includes at least one of the following: an IP address, a port number, an FQDN, and a URL.

Optionally, the first message includes at least one of the following: an IP address, a port number, an FQDN, and a URL of the first terminal.

Optionally, when sending the first message to the second terminal, the first transceiver module 1001 is configured to implement one of the following:
sending the first message to the second terminal by using a direct communication technology; and
sending the first message to the second terminal through an access network device.

Optionally, the data processing apparatus 1000 further includes one of the following:
a second sending module, configured to: after the first transceiver module 1001 sends the first message to the second terminal, receive, by using a direct communication technology, a first accept message sent by the second terminal; and
a fourth receiving module, configured to receive, after the first transceiver module 1001 sends the first message to the second terminal, the first accept message sent by an access network device.

Optionally, the first accept message includes at least one of the following:
an IP address, a port number, an FQDN, and a URL of the first terminal.

Optionally, the second message includes at least one of the following: an IP address, a port number, an FQDN, and a URL of the first terminal.

Optionally, when receiving the second message sent by the second terminal, the first transceiver module 1001 is configured to implement one of the following:
receiving, by using a direct communication technology, the second message sent by the second terminal; and
receiving, through an access network device, the second message forwarded by the second terminal.

Optionally, the data processing apparatus 1000 further includes one of the following:
a third sending module, configured to send, after the first transceiver module 1001 receives the second message sent by the second terminal, a second accept message to the second terminal by using a direct communication technology; and
a fourth sending module, configured to forward, after the first transceiver module 1001 receives the second message sent by the second terminal, the second accept message to the second terminal through an access network device.

Optionally, the second accept message includes at least one of the following:
an IP address, a port number, an FQDN, and a URL of the first terminal.

It is to be noted that, the apparatus embodiment is in a one-to-one correspondence with the method embodiment. All implementation processes of the method embodiment are applicable to the apparatus embodiment and can achieve the same technical effects. Details are not described herein again.

An embodiment of this application further provides a terminal, where the terminal is a first terminal and includes a processor and a communication interface, and the communication interface is configured to: send a mapping rule to a second terminal; or
send a first message to a second terminal or a core network device; or
receive a second message sent by a second terminal, where
the mapping rule is used for instructing the second terminal to perform a data address translation process, the first message is used for requesting the second terminal to perform the data address translation process, and the second message is used for requesting the second terminal to perform the data address translation process.

The embodiment of the terminal corresponds to the embodiment of the method of the terminal side. All implementation processes of the method embodiment are applicable to the embodiment of the terminal and can achieve the same technical effects.

An embodiment of this application further provides a terminal, where the terminal is a first terminal. For a hardware structure of the terminal, refer to FIG. 8. Details are not described herein again.

The radio frequency unit is configured to:
send, by a first terminal, a mapping rule to a second terminal; or
send, by a first terminal, a first message to a second terminal or a core network device; or
receive, by a first terminal, a second message sent by a second terminal, where
the mapping rule is used for instructing the second terminal to perform a data address translation process, the first message is used for requesting the second terminal to perform the data address translation process, and the second message is used for requesting the second terminal to perform the data address translation process.

Optionally, the mapping rule includes:
a mapping relationship between first information of the first terminal and second information of the second terminal, where
the first information includes at least one of the following: an IP address, a port number, a fully qualified domain name FQDN, and a uniform resource locator URL; and
the second information includes at least one of the following: an IP address, a port number, an FQDN, and a URL.

Optionally, the first message includes at least one of the following: an IP address, a port number, an FQDN, and a URL of the first terminal.

Optionally, the radio frequency unit is further configured to implement one of the following:
sending the first message to the second terminal by using a direct communication technology; and
sending the first message to the second terminal through an access network device.

Optionally, the radio frequency unit is further configured to implement one of the following:
receiving, by using a direct communication technology, a first accept message sent by the second terminal; and
receiving the first accept message sent by an access network device.

Optionally, the first accept message includes at least one of the following:
an IP address, a port number, an FQDN, and a URL of the first terminal.

Optionally, the second message includes at least one of the following: an IP address, a port number, an FQDN, and a URL of the first terminal.

Optionally, the radio frequency unit is further configured to implement one of the following:
receiving, by using a direct communication technology, the second message sent by the second terminal; and
receiving, through an access network device, the second message forwarded by the second terminal.

Optionally, the radio frequency unit is further configured to implement one of the following:
sending a second accept message to the second terminal by using a direct communication technology; and
forwarding the second accept message to the second terminal through an access network device.

Optionally, the second accept message includes at least one of the following:
an IP address, a port number, an FQDN, and a URL of the first terminal.

Preferably, an embodiment of this application further provides a terminal, where the terminal is a first terminal and includes a processor, a memory, and a program or instructions stored in the memory and runnable on the processor, the program or instructions, when executed by the processor, implementing the processes of the embodiments of the data processing method, and achieving the same technical effect. To avoid repetition, details are not described herein again.

An embodiment of this application further provides a readable storage medium. The readable storage medium may be non-volatile or volatile. The readable storage medium stores a program or instructions, the program or instructions, when executed by a processor, implementing the processes of the embodiments of the data processing method applied to a first terminal, and achieving the same technical effect. To avoid repetition, details are not described herein again. The computer-readable storage medium is, for example, a read-only memory (read-only memory, ROM), a random access memory (random access memory, RAM), a magnetic disk, or an optical disc.

As shown in FIG. 11, an embodiment of this application further provides a data processing method, including:
Step 1101: An access network device sends a first message to a second terminal;
an access network device receives a second message sent by a second terminal, where
the first message is used for requesting the second terminal to perform a data address translation process, and the second message is used for requesting the second terminal to perform the data address translation process.

Optionally, the first message includes at least one of the following: an IP address, a port number, an FQDN, and a URL of the first terminal.

Optionally, that the access network device sends the first message to the second terminal includes:
receiving, by the access network device, the first message sent by a first terminal or a core network device; and
sending, by the access network device, the first message to the second terminal.

Optionally, after the access network device sends the first message to the second terminal, the method further includes:
receiving, by the access network device, a first accept message sent by the second terminal.

Optionally, after the receiving, by the access network device, a first accept message sent by the second terminal, the method further includes:
sending, by the access network device, the first accept message to a first terminal.

Optionally, the first accept message includes at least one of the following:
an IP address, a port number, an FQDN, and a URL of the first terminal.

Optionally, the second message includes at least one of the following: an IP address, a port number, an FQDN, and a URL of the first terminal.

Optionally, after the access network device receives the second message sent by the second terminal, the method includes:
sending, by the access network device, the second message to a core network device or a first terminal;
receiving, by the access network device, a second accept message sent by the core network device or the first terminal; and
forwarding, by the access network device, the second accept message to the second terminal.

Optionally, the second accept message includes at least one of the following:
an IP address, a port number, an FQDN, and a URL of the first terminal.

It is to be noted that, the descriptions of the access network device in the foregoing embodiments are all applicable to the embodiment of the data processing method applied to the access network device and can achieve the same technical effects. Details are not described herein again.

As shown in FIG. 12, an embodiment of this application further provides a data processing apparatus 1200, used in an access network device, the apparatus including:
a second transceiver module 1201, configured to send a first message to a second terminal; or
receive a second message sent by a second terminal, where
the first message is used for requesting the second terminal to perform a data address translation process, and the second message is used for requesting the second terminal to perform the data address translation process.

Optionally, the first message includes at least one of the following: an IP address, a port number, an FQDN, and a URL of the first terminal.

Optionally, the data processing apparatus 1200 includes:
a second receiving unit, configured to: when the second transceiver module 1201 sends the first message to the second terminal, receive a first message sent by a first terminal or a core network device; and
a fourth sending unit, configured to send the first message to the second terminal.

Optionally, the data processing apparatus 1200 further includes:
a fifth receiving module, configured to: after the second transceiver module 1201 sends the first message to the second terminal, receive a first accept message sent by the second terminal.

Optionally, after the fifth receiving module receives the first accept message sent by the second terminal, the apparatus further includes:
a fifth sending module, configured to send the first accept message to a first terminal.

Optionally, the first accept message includes at least one of the following:
an IP address, a port number, an FQDN, and a URL of the first terminal.

Optionally, the second message includes at least one of the following: an IP address, a port number, an FQDN, and a URL of the first terminal.

Optionally, the data processing apparatus 1200 further includes:
a sixth sending module, configured to send the second message to a core network device or a first terminal after the second transceiver module 1201 receives the second message sent by the second terminal;
a sixth receiving module, configured to receive a second accept message sent by the core network device or the first terminal; and
a seventh sending module, configured to forward the second accept message to the second terminal.

Optionally, the second accept message includes at least one of the following:
an IP address, a port number, an FQDN, and a URL of the first terminal.

Preferably, an embodiment of this application further provides an access network device, including a processor, a memory, and a program or instructions stored in the memory and runnable on the processor, the program or instructions, when executed by the processor, implementing the processes of the embodiments of the data processing method on the side of the access network device, and achieving the same technical effect. To avoid repetition, details are not described herein again.

An embodiment of this application further provides a readable storage medium. The readable storage medium may be non-volatile or volatile. The computer-readable storage medium stores a program or instructions, the program or instructions, when executed by a processor, implementing the processes of the embodiments of the data processing method applied to the side of an access network device, and achieving the same technical effect. To avoid repetition, details are not described herein again.

The computer-readable storage medium is, for example, a read-only memory (read-only memory, ROM), a random access memory (random access memory, RAM), a magnetic disk, or an optical disc.

An embodiment of this application further provides an access network device, including a processor and a communication interface, where the communication interface is configured to: send a first message to a second terminal; or
receive a second message sent by a second terminal, where
the first message is used for requesting the second terminal to perform a data address translation process, and the second message is used for requesting the second terminal to perform the data address translation process.

The embodiment of the access network device corresponds to the embodiment of the method applied to the side of the access network device. All implementation processes of the method embodiment are applicable to the embodiment of the access network device and can achieve the same technical effects.

Specifically, an embodiment of this application further provides an access network device. As shown in FIG. 13, the access network device 1300 includes an antenna 1301, a radio frequency apparatus 1302, and a baseband apparatus 1303. The antenna 1301 is connected to the radio frequency apparatus 1302. In an uplink direction, the radio frequency apparatus 1302 receives information by using the antenna 1301, and sends the received information to the baseband apparatus 1303 for processing. In a downlink direction, the baseband apparatus 1303 processes to-be-processed information, and sends the information to the radio frequency apparatus 1302. The radio frequency apparatus 1302 processes received information and sends the information by using the antenna 1301.

The frequency band processing apparatus may be located in the baseband apparatus 1303, and the method performed by the access network device in the foregoing embodiments may be implemented in the baseband apparatus 1303. The baseband apparatus 1303 includes a processor 1304 and a memory 1305.

The baseband apparatus 1303 may include, for example, at least one baseband plate. A plurality of chips are arranged on the baseband plate. As shown in FIG. 13, one of the plurality of chips is, for example, the processor 1304, and is connected to the memory 1305, to invoke a program in the memory 1305 to perform operations performed by the access network device in the foregoing method embodiment.

The baseband apparatus 1303 may further include a network interface 1306, configured to exchange information with the radio frequency apparatus 1302. The interface is, for example, a common public radio interface (common public radio interface, CPRI).

Specifically, the access network device in this embodiment of this application further includes: instructions or a program stored in the memory 1305 and executable on the processor 1304, and the processor 1304 invokes the instructions or program in the memory 1305 to perform the method performed by the modules shown in FIG. 12, and can achieve the same technical effect. To avoid repetition, details are not described herein again.

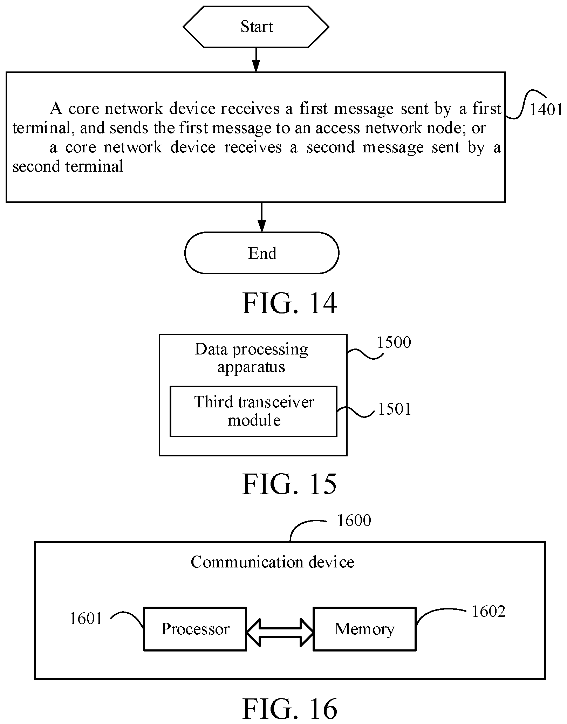

As shown in FIG. 14, an embodiment of this application further provides a data processing method, including:
Step 1401: A core network device receives a first message sent by a first terminal, and sending the first message to an access network node; or
a core network device receives a second message sent by a second terminal, where
the first message is used for requesting the second terminal to perform a data address translation process, and the second message is used for requesting the second terminal to perform the data address translation process.

Optionally, the first message includes at least one of the following: an IP address, a port number, an FQDN, and a URL of the first terminal.

Optionally, the second message includes at least one of the following: an IP address, a port number, an FQDN, and a URL of the first terminal.

Optionally, after the core network device receives the second message sent by the second terminal, the method further includes:
sending, by the core network device, a second accept message to an access network device.

Optionally, the second accept message includes at least one of the following:
an IP address, a port number, an FQDN, and a URL of the first terminal.

It is to be noted that, the descriptions of the core network device in the foregoing embodiments are all applicable to the embodiment of the data processing method applied to the core network device and can achieve the same technical effects. Details are not described herein again.

As shown in FIG. 15, an embodiment of this application further provides a data processing apparatus 1500, used in a core network device, the apparatus including:
a third transceiver module 1501, configured to: receive a first message sent by a first terminal, and send the first message to an access network node; or
receive a second message sent by a second terminal, where
the first message is used for requesting the second terminal to perform a data address translation process, and the second message is used for requesting the second terminal to perform the data address translation process:
   receiving, by a core network device, a first message sent by a first terminal, and sending the first message to an access network node; or

a core network device receives a second message sent by a second terminal, where
the first message is used for requesting the second terminal to perform a data address translation process, and the second message is used for requesting the second terminal to perform the data address translation process.

Optionally, the first message includes at least one of the following: an IP address, a port number, an FQDN, and a URL of the first terminal.

Optionally, the second message includes at least one of the following: an IP address, a port number, an FQDN, and a URL of the first terminal.

Optionally, the data processing apparatus 1500 further includes:
an eighth sending module, configured to send a second accept message to an access network device after the third transceiver module 1501 receives the second message sent by the second terminal,.

Optionally, the second accept message includes at least one of the following:
an IP address, a port number, an FQDN, and a URL of the first terminal.

Preferably, an embodiment of this application further provides a core network device, including a processor, a memory, and a program or instructions stored in the memory and runnable on the processor, the program or instructions, when executed by the processor, implementing the processes of the embodiments of the data processing method on the side of the core network device, and achieving the same technical effect. To avoid repetition, details are not described herein again.

An embodiment of this application further provides a readable storage medium. The readable storage medium may be non-volatile or volatile. The computer-readable storage medium stores a program or instructions, the program or instructions, when executed by a processor, implementing the processes of the embodiments of the data processing method applied to the side of a core network device, and achieving the same technical effect. To avoid repetition, details are not described herein again.

The computer-readable storage medium is, for example, a read-only memory (read-only memory, ROM), a random access memory (random access memory, RAM), a magnetic disk, or an optical disc.

An embodiment of this application further provides a core network device, including a processor and a communication interface, where the communication interface is configured to: receive a first message sent by a first terminal, and send the first message to an access network node; or
receive a second message sent by a second terminal, where
the first message is used for requesting the second terminal to perform a data address translation process, and the second message is used for requesting the second terminal to perform the data address translation process.

The embodiment of the core network device corresponds to the embodiment of the method applied to the side of the core network device. All implementation processes of the method embodiment are applicable to the embodiment of the core network device and can achieve the same technical effects.

Specifically, an embodiment of this application further provides a core network device. For a structure of the core network device, refer to FIG. 13. Details are not described herein again.

Specifically, the core network device in this embodiment of this application further includes: instructions or a program stored in the memory and executable on the processor, and the processor invokes the instructions or program in the memory to perform the method performed by the modules shown in FIG. 15, and can achieve the same technical effect. To avoid repetition, details are not described herein again.

Optionally, as shown in FIG. 16, an embodiment of this application further provides a communication device 1600, including a processor 1601, a memory 1602, and a program or instructions stored in the memory 1602 and runnable on the processor 1601. For example, in a case that the communication device 1600 is a terminal, the program or instructions is executed by the processor 1601 to implement the processes of the embodiments of the data processing method applied to the terminal side, and achieve the same technical effects. In a case that the communication device 1600 is an access network device, the program or instructions is executed by the processor 1601 to implement the processes of the embodiments of the data processing method applied to the side of the access network device, and achieve the same technical effects. In a case that the communication device 1600 is a core network device, the program or instructions is executed by the processor 1601 to implement the processes of the embodiments of the data processing method applied to the side of the core network device, and achieve the same technical effects. To avoid repetition, details are not described herein again.

The terminal in the embodiments of this application may be a device that provides voice and/or data connectivity for a user, may be a handheld device having a wireless connection function, or may be another processing device connected to a wireless modem. In different systems, names of terminal devices may also be different. For example, in a 5G system, the terminal device may be referred to as user equipment (user equipment, UE). A wireless terminal device may communicate with one or more core networks (core networks, CNs) through a radio access network (radio access network, RAN). The wireless terminal device may be a mobile terminal device, such as a mobile phone (or referred to as a "cellular" phone) or a computer with a mobile terminal device. For example, the terminal device may be a portable, pocket-sized, handheld, computer built-in, or in-vehicle mobile apparatus, which exchange language and/or data with the radio access network. For example, the terminal device is a device such as a personal communications service (personal communications service, PCS) phone, a cordless phone, a session initiated protocol (session initiated protocol, SIP) phone, a wireless local loop (wireless local loop, WLL) station, or a personal digital assistant (personal digital assistant, PDA). The wireless terminal device may also be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), or a user device (user device). This is not limited in this embodiment of this application.

The access network device in the embodiments of this application may be a base station (base transceiver station, BTS) in global system for mobile communication (global system for mobile communication, GSM) or code division multiple access (code division multiple access, CDMA), or may be a base station (NodeB, NB) in wideband code division multiple access (wideband code division multiple access, WCDMA), or may be an evolved base station (evolved NodeB, eNB or e-NodeB) in LTE, or may be a relay station, an access point, or a base station in a future 5G network. This is not limited herein.

The access network device and the terminal may each use one or more antennas for multi input multi output (multi input multi output, MIMO) transmission. MIMO transmission may be single-user MIMO (single-user MIMO, SU-MIMO) or multiple-user MIMO (multiple-user MIMO, MU-MIMO). Based on a shape and a number of antenna combinations, MIMO transmission may be 2Dimension MIMO (2Dimension MIMO, 2D-MIMO), 3Dimension MIMO (3Dimension MIMO, 3D-MIMO), full dimension MIMO (full dimension MIMO, FD-MIMO) or massive-MIMO (massive-MIMO, M-MIMO), or may be diversity transmission, precoding transmission, beamforming transmission, or the like.

An embodiment of this application further provides a chip, including a processor and a communication interface coupled to each other, the processor being configured to run a program or instructions to implement the processes of the embodiments of the data processing method, and can achieve the same technical effects. To avoid repetition, details are not described herein again.

It may be understood that, the chip mentioned in this embodiment of this application may also be referred to as a system-level chip, a system chip, a chip system, a system on chip, or the like.

An embodiment of this application further provides a computer program/program product, where the computer program/program product is stored in a non-transitory storage medium, and the computer program/program product is executed by at least one processor to implement the processes of the embodiments of the data processing method, and can achieve the same technical effects. To avoid repetition, details are not described herein again.

It is to be noted that, the term such as "include", "comprise", or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Unless otherwise specified, elements defined by the sentence "including one" does not exclude that there are still other same elements in the processes, methods, objects, or apparatuses. In addition, it is to be noted that, the scope of the method and the apparatus in the embodiments of this application is not limited to executing functions in an order shown or discussed, and may also include executing the functions in a substantially simultaneous manner or in a reverse order according to involved functions. For example, the described method may be performed in an order different from that described order, and various steps may also be added, omitted, or combined. In addition, features described with reference to some examples may also be combined in other examples.

According to the descriptions of the foregoing embodiments, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions of this application essentially or the part contributing to the related art may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to perform the methods described in the embodiments of this application.

The embodiments of this application are described above with reference to the accompanying drawings. However, this application is not limited to the foregoing specific implementations. The foregoing specific implementations are merely illustrative rather than limitative. A person of ordinary skill in the art may derive various forms from this application without departing from the spirit of this application and the scope claimed by the claims, which are all under the protection of this application.

## Claims

1. A data processing method, comprising:
obtaining, by a second terminal, a mapping rule, wherein the mapping rule is used for instructing the second terminal to perform a data address translation process; and
performing, by the second terminal, the data address translation process according to the mapping rule.

2. The method according to claim 1, wherein the obtaining, by a second terminal, a mapping rule comprises:
receiving, by the second terminal, the mapping rule sent by a first terminal.

3. The method according to claim 2, wherein the mapping rule comprises:
a mapping relationship between first information of the first terminal and second information of the second terminal, wherein
the first information comprises at least one of the following: an IP address, a port number, a fully qualified domain name FQDN, and a uniform resource locator URL; and
the second information comprises at least one of the following: an IP address, a port number, an FQDN, and a URL.

4. The method according to claim 1, wherein the obtaining, by a second terminal, a mapping rule comprises:
obtaining, by the second terminal, a first message, wherein the first message is used for requesting the second terminal to perform the data address translation process; and
obtaining, by the second terminal, the mapping rule according to the first message.

5. The method according to claim 4, wherein the first message comprises at least one of the following: an IP address, a port number, an FQDN, and a URL of a first terminal.

6. The method according to claim 4, wherein the obtaining, by the second terminal, a first message comprises one of the following:
receiving, by the second terminal by using a direct communication technology, the first message sent by a first terminal;
receiving, by the second terminal through an access network device, the first message sent by the first terminal; and
receiving, by the second terminal, the first message sent by a core network device.

7. The method according to claim 4, wherein after the obtaining, by the second terminal, a first message, the method further comprises one of the following:
sending, by the second terminal, a first accept message to a first terminal;
sending, by the second terminal, the first accept message to an access network device; and
sending, by the second terminal, the first accept message to a core network device.

8. The method according to claim 7, wherein the first accept message comprises at least one of the following:
an IP address, a port number, an FQDN, and a URL of the first terminal.

9. The method according to claim 1, wherein before the obtaining, by a second terminal, a mapping rule, the method further comprises:
sending, by the second terminal, a second message, wherein the second message is used for requesting the second terminal to perform the data address translation process.

10. The method according to claim 9, wherein the second message comprises at least one of the following: an IP address, a port number, an FQDN, and a URL of a first terminal.

11. The method according to claim 9, wherein the sending, by the second terminal, a second message comprises one of the following:
sending, by the second terminal, the second message to a first terminal by using a direct communication technology;
forwarding, by the second terminal, the second message to the first terminal through an access network device; and
sending, by the second terminal, the second message to a core network device.

12. The method according to claim 9, wherein after the step of sending, by the second terminal, the second message, the method further comprises one of the following:
receiving, by the second terminal by using a direct communication technology, a second accept message sent by a first terminal;
receiving, by the second terminal, the second accept message forwarded by the first terminal through an access network device; and
receiving, by the second terminal, the second accept message forwarded by a core network device through the access network device; and
the obtaining, by a second terminal, a mapping rule comprises:
obtaining the mapping rule according to the second accept message.

13. The method according to claim 12, wherein the second accept message comprises at least one of the following:
an IP address, a port number, an FQDN, and a URL of the first terminal.

14. The method according to claim 1, wherein the performing the data address translation process comprises:
performing the data address translation process in a network address translation NAT manner.

15. A data processing method, comprising:
sending, by a first terminal, a mapping rule to a second terminal; or
sending, by a first terminal, a first message to a second terminal or a core network device; or
receiving, by a first terminal, a second message sent by a second terminal, wherein
the mapping rule is used for instructing the second terminal to perform a data address translation process, the first message is used for requesting the second terminal to perform the data address translation process, and the second message is used for requesting the second terminal to perform the data address translation process.

16. The method according to claim 15, wherein the mapping rule comprises:
a mapping relationship between first information of the first terminal and second information of the second terminal, wherein
the first information comprises at least one of the following: an IP address, a port number, a fully qualified domain name FQDN, and a uniform resource locator URL; and
the second information comprises at least one of the following: an IP address, a port number, an FQDN, and a URL.

17. The method according to claim 15, wherein the first message comprises at least one of the following: an IP address, a port number, an FQDN, and a URL of the first terminal.

18. The method according to claim 15, wherein the sending, by a first terminal, a first message to a second terminal comprises one of the following:
sending, by the first terminal, the first message to the second terminal by using a direct communication technology; and
sending, by the first terminal, the first message to the second terminal through an access network device.

19. The method according to claim 15, wherein after the step of sending, by the first terminal, the first message to the second terminal, the method further comprises:
receiving, by the first terminal by using a direct communication technology, a first accept message sent by the second terminal; and
receiving, by the first terminal, the first accept message sent by an access network device.

20. The method according to claim 19, wherein the first accept message comprises at least one of the following:
an IP address, a port number, an FQDN, and a URL of the first terminal.

21. The method according to claim 15, wherein the second message comprises at least one of the following: an IP address, a port number, an FQDN, and a URL of the first terminal.

22. The method according to claim 15, wherein the receiving, by a first terminal, a second message sent by a second terminal comprises one of the following:
receiving, by the first terminal by using a direct communication technology, the second message sent by the second terminal; and
receiving, by the first terminal through an access network device, the second message forwarded by the second terminal.

23. The method according to claim 15, wherein after the step of receiving, by the first terminal, the second message sent by the second terminal, the method further comprises one of the following:
sending, by the first terminal, a second accept message to the second terminal by using a direct communication technology; and
forwarding, by the first terminal, the second accept message to the second terminal through an access network device.

24. The method according to claim 23, wherein the second accept message comprises at least one of the following:
an IP address, a port number, an FQDN, and a URL of the first terminal.

25. A data processing method, comprising:
sending, by an access network device, a first message to a second terminal; or
receiving, by an access network device, a second message sent by a second terminal, wherein
the first message is used for requesting the second terminal to perform a data address translation process, and the second message is used for requesting the second terminal to perform the data address translation process.

26. The method according to claim 25, wherein the first message comprises at least one of the following: an IP address, a port number, an FQDN, and a URL of a first terminal.

27. The method according to claim 25, wherein the sending, by an access network device, a first message to a second terminal comprises:
receiving, by the access network device, the first message sent by a first terminal or a core network device; and
sending, by the access network device, the first message to the second terminal.

28. The method according to claim 25, wherein after the step of sending, by the access network device, the first message to the second terminal, the method further comprises:
receiving, by the access network device, a first accept message sent by the second terminal.

29. The method according to claim 28, wherein after the step of receiving, by the access network device, the first accept message sent by the second terminal, the method further comprises:
sending, by the access network device, the first accept message to a first terminal.

30. The method according to claim 28 or 29, wherein the first accept message comprises at least one of the following:
an IP address, a port number, an FQDN, and a URL of the first terminal.

31. The method according to claim 25, wherein the second message comprises at least one of the following: an IP address, a port number, an FQDN, and a URL of a first terminal.

32. The method according to claim 25, wherein after the step of receiving, by the access network device, the second message sent by the second terminal, the method comprises:
sending, by the access network device, the second message to a core network device or a first terminal;
receiving, by the access network device, a second accept message sent by the core network device or the first terminal; and
forwarding, by the access network device, the second accept message to the second terminal.

33. The method according to claim 32, wherein the second accept message comprises at least one of the following:
an IP address, a port number, an FQDN, and a URL of the first terminal.

34. A data processing method, comprising:
receiving, by a core network device, a first message sent by a first terminal, and sending the first message to an access network node; or
receiving, by a core network device, a second message sent by a second terminal, wherein
the first message is used for requesting the second terminal to perform a data address translation process, and the second message is used for requesting the second terminal to perform the data address translation process.

35. The method according to claim 34, wherein the first message comprises at least one of the following: an IP address, a port number, an FQDN, and a URL of the first terminal.

36. The method according to claim 34, wherein the second message comprises at least one of the following: an IP address, a port number, an FQDN, and a URL of the first terminal.

37. The method according to claim 34, wherein after the step of receiving, by the core network device, the second message sent by the second terminal, the method further comprises:
sending, by the core network device, a second accept message to an access network device.

38. The method according to claim 37, wherein the second accept message comprises at least one of the following:
an IP address, a port number, an FQDN, and a URL of the first terminal.

39. A data processing apparatus, used in a second terminal, the apparatus comprising:
a first obtaining module, configured to obtain a mapping rule, wherein the mapping rule is used for instructing the second terminal to perform a data address translation process; and
a translation module, configured to perform the data address translation process according to the mapping rule.

40. A data processing apparatus, used in a first terminal, the apparatus comprising:
a first transceiver module, configured to: send a mapping rule to a second terminal; or
send a first message to a second terminal or a core network device; or
receive a second message sent by a second terminal, wherein
the mapping rule is used for instructing the second terminal to perform a data address translation process, the first message is used for requesting the second terminal to perform the data address translation process, and the second message is used for requesting the second terminal to perform the data address translation process.

41. A data processing apparatus, used in an access network device, the apparatus comprising:
a second transceiver module, configured to send a first message to a second terminal; or
receive a second message sent by a second terminal, wherein
the first message is used for requesting the second terminal to perform a data address translation process, and the second message is used for requesting the second terminal to perform the data address translation process.

42. A data processing apparatus, used in a core network device, the apparatus comprising:
a third transceiver module, configured to: receive a first message sent by a first terminal, and send the first message to an access network node; or
receive a second message sent by a second terminal, wherein
the first message is used for requesting the second terminal to perform a data address translation process, and the second message is used for requesting the second terminal to perform the data address translation process.

43. A terminal, wherein the terminal is a first terminal or a second terminal, and comprises a processor, a memory, and a program or instructions stored in the memory and executable on the processor, the program or instructions, when executed by the processor, implementing the steps of the data processing method according to any one of claims 1 to 24.

44. An access network device, comprising a processor, a memory, and a program or instructions stored in the memory and executable on the processor, the program or instructions, when executed by the processor, implementing the steps of the data processing method according to any one of claims 25 to 33.

45. A core network device, comprising a processor, a memory, and a program or instructions stored in the memory and executable on the processor, the program or instructions, when executed by the processor, implementing the steps of the data processing method according to any one of claims 34 to 38.

46. A readable storage medium, storing a program or instructions, the program or instructions, when executed by a processor, implementing the steps of the data processing method according to any one of claims 1 to 38.

47. A chip, comprising a processor and a communication interface, wherein the communication interface is coupled to the processor, and the processor is configured to run a program or instructions to implement the steps of the data processing method according to any one of claims 1 to 38.

48. A computer program product, stored in a non-transient readable storage medium, the computer program product being executed by at least one processor to implement the steps of the data processing method according to any one of claims 1 to 38.

49. A communication device, configured to perform the steps of the data processing method according to any one of claims 1 to 38.
